(19) Europäisches Patentamt
European Patent Office
Office européen des brevets

(11) EP 3 673 745 A1

(12) EUROPEAN PATENT APPLICATION
published in accordance with Art. 153(4) EPC

(43) Date of publication:
**01.07.2020 Bulletin 2020/27**

(21) Application number: **18847310.2**

(22) Date of filing: **21.08.2018**

(51) Int Cl.:
***A23K 50/80*** *(2016.01)* ***A01K 61/10*** *(2017.01)*
***A23K 10/22*** *(2016.01)* ***A23K 40/30*** *(2016.01)*
***A23L 17/00*** *(2016.01)*

(86) International application number:
**PCT/JP2018/030843**

(87) International publication number:
**WO 2019/039472 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2017 JP 2017159803**

(71) Applicant: **Nippon Suisan Kaisha, Ltd.**
**Minato-ku, Tokyo 105-8676 (JP)**

(72) Inventor: **GOTO, Tsuyoshi**
**Hachioji-shi**
**Tokyo 192-0991 (JP)**

(74) Representative: **Plougmann Vingtoft a/s**
**Strandvejen 70**
**2900 Hellerup (DK)**

# (54) CULTURED TUNA AND USE THEREOF, AND METHOD FOR PRODUCING CULTURED TUNA

(57) Provided are: a cultured tuna having a lower selenium content compared to natural tunas; a method for rearing the same; a processed food of the cultured tuna having a low selenium content; and a method for manufacturing the processed food. The cultured tuna which has either of muscles with a selenium content of 90 µg/100 g or less or liver with a selenium content of 1400 µg/100 g or less, the edible parts of the same and a thermally processed food which contains the edible parts. The method for rearing the cultured tuna comprises feeding the tuna with a formula feed continuously for 30 days or longer, said formula feed comprising an inner capsule in which a fish meal containing 30 wt% or more of sardine meal and a fat or oil are enclosed and an outer coating which coats the inner capsule and is formed of at least one material selected from the group consisting of a protein and a polysaccharide.

FIG.2

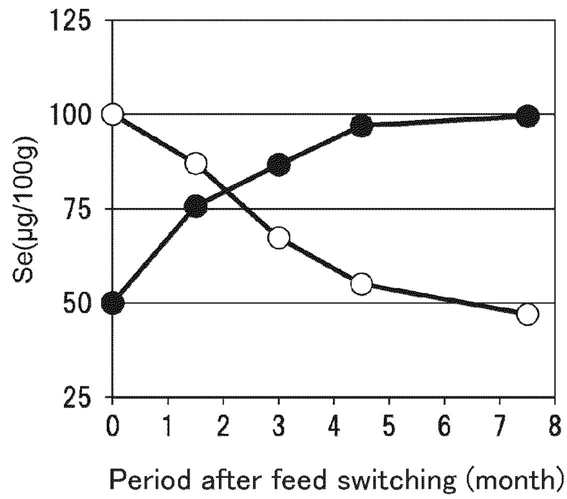


EP 3 673 745 A1

## Description

### Technical Field

The present disclosure relates to a farmed tuna species and applications thereof, and a method for producing a farmed tuna species.

### Background Art

From the perspective of nutrition, stable supply, environmental pollution concerns and sustained aquaculture, there have been attempts in fish aquaculture to change over from bait fish to artificial feed, and various artificial feeds have been developed. Artificial feeds aligned with palatability to a fish species have been proposed to advance the changeover to artificial feeds, particularly for highly ichthyophagous fish species.

For example, WO 2010/110326 A1 and JP 2012-65565 A disclose feeds for fish farming having an outer layer and an inner layer. Here, it is disclosed that these feeds for fish farming are used in highly palatable farmed fish such as tuna species, and leads to good feed consumption and feed efficiency. JP 2014-45750 A discloses a two-layered structure feed including an outer shell and an filling mass containing protein raw material and liquid oil, and states that this feed leads to high feed consumption and suppresses oil leakage.

Selenium is a trace element that expresses physiological functions in the form of selenium-containing proteins and is important in antioxidant systems and thyroid hormone metabolism. The recommended amount of selenium intake is 30 μg for adult male, 25 μg for adult female, and children have a recommended selenium intake amount below the recommended amount of adults, which is 20 μg. Large intake of selenium can be toxic, and weakening and falling of hair and nails due to excessive ingestion of selenium are known. On the other hand, it is known that tuna species contains high concentration of selenium. For example, Journal of Food Composition and Analysis, 2001, Vol. 14, pp. 461 to 467 describes that the selenium content of wild tuna is 0.743 mg/kg, and the selenium content in the muscle (lean meat) of the tuna species is approximately 110 μg/100 g according to the Standard Tables of Food Composition in Japan - 2015 (Seventh Revised Edition).

### Summary of the Invention

Technical Problem

As mentioned above, tuna is a fish known to have a high selenium content, but as tuna is a fish that can be relatively easily eaten as in Sashimi (raw fish cut into thins pieces), selenium intake is more likely to exceed the recommended intake by eating tuna species. As wild tuna species and farmed fish reared with bait fish freely eat fish such as horse mackerel and mackerel, it is difficult to adjust the selenium content. Thus, farmed tuna species with a controlled low selenium content is required to be newly produced.

It is therefore an object of the present disclosure to provide a farmed tuna species with low selenium content compared to wild tuna species and farmed tuna species reared with bait fish and a method for rearing the same, as well as to provide edible parts of the farmed tuna species with low selenium content and the processed food and the production method of the same.

Solution to Problem

The present disclosure comprises the following embodiments.

[1] A farmed tuna species having either a muscle with a selenium content of less than or equal to 90 μg per 100 g or liver with a selenium content of less than or equal to 1400 μg per 100 g.

[2] The farmed tuna species according to [1], wherein the farmed tuna species is obtained by rearing management with feed including a artificial feed.

[3] The farmed tuna species according to [1] or [2], wherein a total fish body weight is greater than or equal to 20 kg.

[4] The farmed tuna species according to any one of [1] to [3], wherein the caudal furca length is greater than or equal to 90 cm.

[5] The farmed tuna species according to any one of [1] to [4], wherein a condition factor is greater than or equal to 20.

[6] The farmed tuna species according to any one of [1] to [5], wherein the farmed tuna species is a tuna species of the Thunnus genus, Auxis genus, Sarda genus, Euthynnus genus, or Katsuwonus genus.

[7] The farmed tuna species according to [6], wherein the farmed tuna species is Thunnus alalunga, Thunnus orientalis, Thunnus maccoyii, Thunnus atlanticus, Thunnus thynnus, Thunnus albacares, Thunnus obesus, Thunnus tonggol, Sarda orientalis, or Euthynnus affinis.

[8] The farmed tuna species according to any one of [6] or [7], wherein the farmed tuna species is a tuna species having a staple food of fishes having the northern hemisphere as a habitat.

[9] The farmed tuna species according to [8], wherein the farmed tuna species is Thunnus alalunga, Thunnus orientalis, Thunnus atlanticus, Thunnus thynnus, Thunnus albacares, Thunnus obesus, Thunnus tonggol, Sarda orientalis, or Euthynnus affinis.

[10] The farmed tuna species according to any one of [1] to [9], wherein at least one site selected from the group consisting of gills, guts, tail section, and head section is removed.

[11] The farmed tuna species according to any one of [1] to [10], wherein the species has a morphology in which gills and guts are removed.

[12] The farmed tuna species according to [11], wherein the total weight is greater than or equal to 17 kg.

[13] An edible part of a farmed tuna species having either a muscle with a selenium content of less than or equal to 90 μg per 100 g or a liver with a selenium content of less than or equal to 1400 μg per 100 g.

[14] The edible part of the farmed tuna species according to [13], wherein the edible part is at least a portion of fish meat or guts.

[15] The edible part of the farmed tuna species according to [13], wherein the edible part is lean meat or fatty meat.

[16] The edible part of the farmed tuna species according to [14], wherein the selenium content in muscle is less than or equal to 90 μg per 100 g or the selenium content in liver is less than or equal to 1400 μg per 100 g.

[17] A processed food of the farmed tuna species comprising the edible part of the farmed tuna species of any one of [13] to [16] and the container containing the edible part.

[18] The method for rearing the farmed tuna species according to any one of [1] to [12] comprising feeding for at least 30 continuous days with a artificial feed including an filling mass containing oil and fish meal constituted from greater than or equal to 30% weight of sardine fish meal, and an outer shell constituted from at least one substance selected from the group consisting of proteins and polysaccharides, which wraps the filling mass.

[19] A method for producing the processed food of the farmed tuna species including: providing a farmed tuna species obtained by the method for rearing the farmed tuna species of [18];

collecting an edible part from the provided farmed tuna species; and containing the edible part in a container.

Advantageous Effects of Invention

The present disclosure allows to provide a farmed tuna species with low selenium content compared to wild tuna species and farmed tuna species breed with bait fish and a method for rearing the same, as well as edible parts of the farmed tuna species with low selenium content and the processed food and the production method of the same.

## Brief Description of Drawing

[FIG. 1] Fig. 1 is a schematic view of a cross section in a direction orthogonal to the longitudinal direction of a fish body showing the locations where fish meat is collected in the Examples.

[FIG .2] Fig. 2 is a graph showing the change in selenium content in the muscles of farmed tuna species in the Examples.

[FIG. 3] Fig. 3 is a graph showing the change in selenium content in the liver of farmed tuna species in the Examples.

[Fig. 4] Fig. 4 is a perspective view an example of a processed food of the farmed tuna species in the present disclosure.

## Description of Embodiments

Referring to "step" in the present disclosure, what is taken into consideration is that the purpose of the step is achieved, and it does not matter whether the step can be clearly distinguished from other steps. In the present disclosure, numeric ranges indicated by the word "to" are ranges that include the minimum and maximum values stated each before and after the word.

In the present disclosure, when an upper limit value is expressed as "less than or equal to" or "less than" with respect to a numerical range expressed as a percentage value of a component and the lower limit value is not particularly referred, the lower limit value is referred to as 0 %, i.e., the component is not present. When reference is made to the content of a component in a composition in the present disclosure, when a plurality of materials or raw materials constituting the composition each contain the component, unless otherwise indicated, the total amount of the component contained in the plurality of materials or raw materials is referred.

Selenium content in the present disclosure is expressed as the content of 100 g of the subject (e.g., muscle or liver) as the unit weight. Therefore, it does not necessarily mean that the size of the entire muscle or liver in the farmed tuna species, or the size of the entire edible part of the farmed tuna species is 100 g.

The farmed tuna species in one embodiment of the present disclosure has either a muscle with a selenium content of 90 μg or less per 100 g or a liver with a selenium content of less than or equal to 1400 μg per 100 g. In the present specification, this farmed tuna species may be referred to as "low selenium farmed tuna species". It should be noted that both such muscle and liver may be included.

The edible part of the farmed tuna species in one embodiment of the present disclosure is the edible part of the farmed tuna species having either a muscle with a selenium content of 90 μg or less per 100 g or a liver with a selenium content of less than or equal to 1400 μg per 100 g. The farmed tuna species in one embodiment of the present disclosure may have both of such muscle and liver.

A processed food of the farmed tuna species in one embodiment of the present disclosure comprises an edible part of the farmed tuna species and a container containing the edible part.

Whereas selenium content in the lean meat of the wild tuna is 110 μg per 100 g, in the farmed tuna species of the present disclosure, selenium content is less than or equal to 90 μg per 100 g in the muscles or less than or equal to 1400 μg per 100 g in the liver. So, the selenium content in the farmed tuna species is greatly reduced. Farmed tuna species having tissues with such low selenium content and the edible part of the farmed tuna species has not yet been confirmed.

Therefore, as the farmed tuna species in the present disclosure contains selenium at a much lower concentration compared to that in the wild tuna species which feed from bait fish, it allows to suppress selenium intake compared to that of in wild tuna or farmed tuna species reared with bait fish even when edible parts such as muscles or liver are eaten. As a result of this, the risk of over-ingestion of selenium can be lowered compared to that in wild tuna or the farmed tuna species breed with bait fish.

The method for rearing the farmed tuna species in an embodiment of the present disclosure includes feeding for at least 30 continuous days with a artificial feed comprising an filling mass containing oil and fish meal constituted from greater than or equal to 30 wt.% of sardine fish meal, and an outer shell constituted from at least one substance selected from the group consisting of proteins and polysaccharides, which wraps the filling mass.

The method for rearing the farmed tuna species with low selenium comprises rearing which uses a artificial feed comprising an filling mass and an outer shell wrapping the filling mass, and here, the filling mass contains oil and fish meal constituted from greater than or equal to 30% weight of sardine fish meal, By feeding such a artificial feed continuously for at least 30 days, the low selenium farmed tuna species can be efficiently obtained.

Herein below, each embodiment will be described in further details.

Farmed Tuna Species

Examples of the tuna species which is the low selenium farmed tuna species include Thunnini genus and the Sardini genus. Examples of fish of the Thunnini tribe include fish of the Thunnus genus, Auxis genus, Euthynnus genus, and Katsuwonus genus. Examples of fish of the Sardini tribe include fish of the Gymnosarda genus, and the Sarda genus. Examples of tuna species include Thunnus genus fishes such as Thunnus alalunga, Thunnus orientalis, Thunnus maccoyii, Thunnus atlanticus, Thunnus thynnus, Thunnus albacares, Thunnus obesus, and Thunnus tonggol; Katsuwonus pelamis; Auxis genus fishes such as Auxis thazard and Auxis rochei; and Euthynnus affinis; or Sarda orientalis, Thunnus orientalis, Thunnus maccoyii, Thunnus atlanticus, Thunnus thynnus, Thunnus albacares, Thunnus obesus, Thunnus tonggol, Sarda orientalis, or Euthynnus affinis.

The low selenium farmed tuna species are preferably tuna species that have a staple food of fishes having the northern hemisphere as a habitat. In nature, tuna species that may have a staple food of fishes having the northern hemisphere as a habitat may be Thunnus alalunga, Thunnus orientalis, Thunnus atlanticus, Thunnus thynnus, Thunnus albacares, Thunnus obesus, Thunnus tonggol, Sarda orientalis, or Euthynnus affinis.

The low selenium farmed tuna species may be farmed fish obtained by any method, and it is preferably those obtained by rearing management with feed including artificial feed. "Artificial feed" means feed that ingredients are combined so as to have satisfactory nutrients such as proteins, vitamins, and minerals required for the growth of fish. "Rearing management" means that fish are reared using feed selected for achieving a specified objective.

The low selenium farmed tuna species has either a muscle with a selenium content of less than or equal to 90 μg per 100 g or a liver with a selenium content of less than or equal to 1400 μg per 100 g. Note that both of such muscle and liver may be included. Because the muscle and liver are common edible parts of the farmed tuna species, if the selenium content of either muscle or liver is within the above range, selenium intake can be lowered compared to the intake when wild tuna or the farmed tuna species reared with bait fish are eaten.

The selenium content in the muscle of the low selenium farmed tuna species is less than or equal to 90 μg per 100 g of muscles, and from the view point of allowing the provision of the edible part with a lower selenium content, this is defined to be less than or equal to 80 μg, less than or equal to 70 μg, less than or equal to 60 μg, less than or equal to 55 μg, or less than or equal to 50 μg. If selenium content is lower, the risk of over-consumption tends to be further reduced. The lower limit of the selenium content is not particularly limited, and for example, it may be greater than or equal to 30 μg or greater than or equal to 35 μg/100 g. Furthermore, although it is actually difficult to conceive, in view of the purpose of the present disclosure, the selenium content per 100 g of muscle may be zero.

Though the selenium content in the liver of the low selenium farmed tuna species is less than or equal to 1400 μg per 100 g of liver, from the view point of allowing the provision of the edible part with a lower selenium content, this can be defined to be less than or equal to 1350 μg, less than or equal to 1300 μg, less than or equal to 1200 μg, less than or equal to 1100 μg, less than equal to 1000 μg, less than or equal to 900 μg, less than or equal to 800 μg, less than or equal to 700 μg, or less than or equal to 600 μg. If selenium content is lower, the risk of excessive ingestion tends to be further reduced. The lower limit of the selenium content is not particularly limited, and for example, it may be greater than or equal to 300 μg. Furthermore, although it is actually difficult to conceive, in view of the purpose of the present disclosure, the selenium content per 100 g of liver may be zero.

Examples of muscles include the dorsal lateral muscle, ventral lateral muscle, dorsal carinal muscle, ventral carinal muscle, and red muscle. The dorsal lateral muscle, ventral lateral muscle, dorsal carinal muscle, and ventral carinal muscle can be divided into lean meat, which is located in the relatively deep portion of a fish body, exhibits a red tinge, and has a high myoglobin content, and fatty meat, which is located in the relatively shallow portion of a fish body, exhibits a paler red tinge, and has a lower myoglobin content. Fatty meat is sometimes called the common name "tuna belly," which is called "high fatty tuna belly" or "medium fatty tuna belly" or the like according to its fat content. The red muscle is a muscle having a red-brown color near the junction of the dorsal and ventral lateral muscles.

Selenium content in the present disclosure means the value measured as follows: In the case of a muscle, a portion of the muscle measuring, for example, approximately 5 cm square is cut out and used as a sample. In the case of the liver, a portion of the liver measuring, for example, approximately 5 cm x 5 cm is cut out from the center portion and used as a sample.

The amount of selenium in a test sample is measured by a method based on "(1) Quantification of fluorescent luminous intensity measurement" of page 433 of "Methods of Analysis in Health Science 2010" (Edited by the Pharmaceutical Society of Japan)(issued on February 20, 2010, KANEHARA & Co. LTD.)

Selenium can include inorganic selenium and organic selenium, and organic selenium includes selenium containing proteins such as glutathione peroxidase, iodothyronine deiodinase, and thioredoxin reductase, selenium-containing amino acids such as selenomethionine and selenocysteine. Low selenium farmed tuna species may contain these inorganic selenium and organic selenium alone or in a combination of two or more.

Preferably, the low selenium farmed tuna species has a lower selenium content in both of muscle and liver than wild tuna species and farmed tuna species reared with bait fish. For example, low selenium farmed tuna species can have muscles with a selenium content of less than or equal to 90 μg, less than or equal to 80 μg, less than or equal to 70 μg, less than or equal to 60 μg, less than or equal to 55μg or less than or equal to 50 μg or less per 100 g and a liver with a selenium content of less than or equal to 1400 μg, less than or equal to 1350 μg, less than or equal to 1300 μg, less than or equal to 1200 μg, less than or equal to 1100 μg, less than or equal to 1000 μg, less than or equal to 900 μg, less than or equal to 800 μg, less than or equal to 700 μg or less than or equal to 600 μg per 100 g.

More preferably, low selenium farmed tuna species can have muscles with a selenium content of greater than or equal to 30 μg, less than or equal to 70 μg, less than or equal to 60 μg, less than or equal to 55 μg, less than or equal to 50 μg per 100 g and a liver with a selenium content of greater than or equal to 300 μg, less than or equal to 1000 μg, less than or equal to 900 μg, less than or equal to 800 μg, less than or equal to 700 μg, less than or equal to 600 μg per 100 g.

The low selenium farmed tuna species may preferably have a condition factor of greater than or equal to 20, more preferably greater than or equal to 21, and even more preferably greater than or equal to 22. The low selenium farmed tuna species with a condition factor of greater than or equal to 20 can provide a greater amount of edible parts enriched with fats than that of wild fish.

Condition factor can generally be evaluated based on the following Equation (1).

$$\text{Condition factor} = \text{Weight(g)}/[\text{Caudal furca length (cm)}^3\} \times 1000 \ldots [1]$$

The low selenium farmed tuna species may have a caudal furca length of greater than or equal to 90 cm, greater than or equal to 100 cm, greater than or equal to 120 cm, greater than or equal to 150 cm, or greater than or equal to 200 cm. The low selenium farmed tuna species with a caudal furca length of greater than or equal to 90 cm tends to have a higher condition factor compared to the wild fish and can provide a greater amount of edible parts. Caudal furca length is the distance from the tip of the head section of a fish to the end of the fin center, and is an index of external morphology known to persons skilled in the art. The caudal furca length is measured as the planar linear distance from the tip of the head section of a fish to the end of the fin center. The upper limit of the caudal furca length of the low selenium farmed tuna species is not particularly limited, and for example, it may be less than or equal to 1000 cm.

In case of a fish individual of low selenium farmed tuna species, the weight of the entire fish of the low selenium farmed tuna species, i.e., the total fish body weight is preferably greater than or equal to 20 kg, more preferably greater than or equal to 25 kg, even more preferably greater than or equal to 30 kg, yet more preferably greater than or equal to 35 kg, and particularly preferably greater than or equal to than 40 kg. Low selenium farmed tuna species with a heavier total fish weight can have advantages of being able to obtain more edible parts.

The upper limit of the weight of the entire fish of the low selenium farmed tuna species is not particularly limited, and for example, it may be less than or equal to 500 kg.

The measurement of the weight of the fish individual is performed after landing caught fish, draining blood, and removing the gill and guts. The weight is measured on a fish which gill and guts are removed, i.e., a GG tuna described below. The total weight of the removed guts and gill and the weight of GG tuna are added up to make the "total fish body weight". A measurement device generally used in measuring fish weight can be used to measure the weight.

Morphologies of low selenium farmed tuna species include sites anywhere from the head section to the tail section, that is, an "individual fish", and a "processed form" in which a portion of the fish body of an individual fish has been removed.

Examples of low selenium farmed tuna species in processed form include those in which at least one location selected from the group consisting of the gills, guts, tail section, and head section have been removed. Examples of guts include the esophagus, stomach, intestine, liver, pyloric appendage, testes, ovaries, spleen, heart, and swim bladder. The processed morphology may be selected as appropriate in response to the convenience of distribution, and may be, for example, a morphology in which the gills and guts have been removed. Tuna species having a morphology in which gills and guts have been removed are generally called GG (gilled and gutted) tuna. In other words, "GG tuna" indicates a morphology in which gills and guts, specifically, the esophagus, stomach, intestine, liver, pyloric appendage, gonads (testes or ovaries), spleen, heart, and swim bladder, have been removed. Farmed tuna species in such processed form may be referred to as tuna species treated product.

The weight of GG tuna is known to be equivalent to from 85% to 89% of total fish body weight. The weight of GG tuna in this embodiment of the present disclosure is preferably greater than or equal to 17 kg, more preferably greater than or equal to 21 kg, and further preferably greater than or equal to 26 kg, and further preferably greater than or equal to 34 kg. As the weight increases, advantages such as being able to obtain the more edible parts can be obtained. The length of GG tuna is substantially the same as the caudal furca length of the low selenium farmed tuna species described above. Specifically, GG tuna can have a length of greater than or equal to 90 cm, greater than or equal to 100 cm, or greater than or equal to 120 cm. GG tuna having a length of greater than or equal to 90 cm have a large fish body compared to the wild fish, and can provide a greater amount of edible parts.

Other examples of processed form include a so-called headless form in which the head section and tail section have been further removed from a GG tuna, and a so-called loin form in which a headless morphology is divided into right and left sides and then dorsal and ventral sides to form four pieces.

For example, low selenium farmed tuna species at a processed form in which at least one site selected from the group consisting of gills, guts, and head section can have muscles with a selenium content of less than or equal to 90 μg, less than or equal to 80 μg, less than or equal to 70 μg, less than or equal to 60 μg, less than or equal to 55μg or less than or equal to 50 μg per 100 g and a liver with a selenium content of less than or equal to 1400 μg, less than or equal to 1350 μg, less than or equal to 1300 μg, less than or equal to 1200 μg, less than or equal to 1100 μg, less than or equal to 1000 μg, less than or equal to 900 μg, less than or equal to 800 μg, less than or equal to 700μg or less than or equal to 600 μg per 100 g. The selenium content in the muscle or liver of the low selenium farmed tuna species in the processed form is not particularly limited as described above, but in case of muscles, the selenium content can be greater than or equal to 30μg per 100 g and in case of liver, for example, greater than or equal to 300 μg or greater than or equal to 350 μg per 100 g.

The low selenium farmed tuna species according to an embodiment of the present disclosure include the following, for example:

(1) low selenium farmed tuna species having muscles with a selenium content greater than or equal to 30 μg, and less than or equal to 70 μg, less than or equal to 60 μg, less than or equal to 55 μg, or less than or equal to 50 μg per 100 g, and whose condition factor is greater than or equal to 21, whose total fish body weight is greater than or equal to 25 kg, or whose caudal furca length is greater than or equal to 90 cm;

(2) low selenium farmed tuna species having muscles with a selenium content greater than or equal to 30 μg, and less than or equal to 70 μg, less than or equal to 60 μg, less than or equal to 55 μg, or less than or equal to 50 μg per 100 g, and whose condition factor is greater than or equal to 20, whose total fish body weight is greater than or equal to 20 kg, or whose caudal furca length is greater than or equal to 100 cm;

(3) low selenium farmed tuna species which is a GG tuna, having muscles with a selenium content greater than or equal to 30 μg, and less than or equal to 70 μg, less than or equal to 60 μg, less than or equal to 55 μg, or less than or equal to 50 μg per 100 g, and whose condition factor is greater than or equal to 21, whose total weight is greater than or equal to 21 kg, or whose caudal furca length is greater than or equal to 90 cm; and
(4) low selenium farmed tuna species which is a GG tuna, having muscles with a selenium content greater than or equal to 30 μg, and less than or equal to 70 μg, less than or equal to 60 μg, less than or equal to 55 μg, or less than or equal to 50 μg per 100 g, and whose condition factor is greater than or equal to 20, whose total weight is greater than or equal to 17 kg, or whose caudal furca length is greater than or equal to 100 cm;
(5) low selenium farmed tuna species having a liver with a selenium content greater than or equal to 300 μg, and less than or equal to 1000 μg, less than or equal to 900 μg, less than or equal to 800 μg, less than or equal to 700 μg, or less than or equal to 600 μg per 100 g, and whose condition factor is greater than or equal to 21, whose total fish body weight is greater than or equal to 25 kg, or whose caudal furca length is greater than or equal to 90 cm;
(6) low selenium farmed tuna species having a liver with a selenium content greater than or equal to 300 μg, and less than or equal to 1000 μg, less than or equal to 900 μg, less than or equal to 800 μg, less than or equal to 700 μg, or less than or equal to 600 μg per 100 g, and whose condition factor is greater than or equal to 20, whose total fish body weight is greater than or equal to 20 kg, or whose caudal furca length is greater than or equal to 100 cm;
(7) low selenium farmed tuna species which is a GG tuna, having a liver with a selenium content greater than or equal to 300 μg, less than or equal to 1000 μg, less than or equal to 900 μg, less than or equal to 800 μg, less than or equal to 700 μg, or less than or equal to 600 μg per 100 g, and whose condition factor is greater than or equal to 21, whose total weight is greater than or equal to 21 kg, or whose caudal furca length is greater than or equal to 90 cm; and
(8) low selenium farmed tuna species which is a GG tuna, having a liver with a selenium content greater than or equal to 300 μg, and less than or equal to 1000 μg, less than or equal to 900 μg, less than or equal to 800 μg, less than or equal to 700 μg, or less than or equal to 600 μg per 100 g, and whose condition factor is greater than or equal to 20, whose total weight is greater than or equal to 17 kg, or whose caudal furca length is greater than or equal to 100 cm.

As the low selenium farmed tuna species (1) to (8) have low selenium contents, a food with a reduced selenium intake amount could be provided when used them as a food. Forms (1) to (4) related to muscles, and forms (5) to (8) related to liver may be independently chosen to use in combination within the possible range.

Edible Parts and Processed Food

One embodiment of the present disclosure is an edible part of the farmed tuna species having either a muscle with a selenium content of less than or equal to 90 μg per 100 g or a liver with a selenium content of less than or equal to 1400 μg per 100 g. In other words, the edible part of this farmed tuna species may be an edible part of the above-stated low selenium farmed tuna species. As stated above, the low selenium farmed tuna species has a low selenium content in the individual. Thus, edible parts obtained from the low selenium farmed tuna species can also be of lower selenium content than the edible parts obtained from wild tuna species or farmed tuna species eating bait fish. Thus, when the edible part according to an example of the present disclosure is provided as a food, selenium intake amount can be maintained lower and the risk of over-ingestion of selenium can be reduced compared to when the edible part of the same site in wild or farmed tuna species reared with bait fish is provided. The edible part of such farmed tuna species may be referred as tuna species edible parts.
"Edible part" may be, for example, fish meat, guts, eyeballs, skin, brain, and blood as long as it is a site of a fish body that can be supplied as a food. In the case of tissues and organs, it may be the entire tissue or organ, and moreover, it may be further a portion thereof. For example, in the case of the liver, the edible part may be the entire liver or a portion thereof. Note that the term "for food" as used herein may not only be food for human but also for food for animals other than human.
The edible part may be fish meat or may be at least part of the guts.
Fish meat as an edible part is muscle, and is generally a portion that is eaten unheated (raw) or heated. Examples of fish meat include the above-described lean meat, fatty meat, and red muscle, but lean meat or fatty meat is preferred.
Examples of guts as edible parts include the liver, pyloric appendage, stomach, esophagus, intestine, gonads (testes or ovaries), spleen, heart, and swim bladder. These guts generally can be eaten heated. The muscles surrounding the eyeball may also be attached to the eyeball as an edible part.
As stated above, the edible parts of the farmed tuna species in one embodiment of the present disclosure are edible parts of low selenium farmed tuna species, i.e., a muscle with a selenium content of less than or equal to 90 μg per 100 g or a liver with a selenium content of less than or equal to 1400 μg per 100 g. As for selenium content for fish meat (muscle) and liver as an edible part, the matter already described for low selenium tuna species is applied as it is. Regarding the other sites as edible parts, as in the muscle and liver, since the selenium content is low compared to that of such as wild tuna, it is necessary to make the content lower than the content in the corresponding site of wild tuna, and for example, for the stomach, it may be less than or equal to 250 μg per 100 g.

The sites surrounding the fish meat or guts may also be attached to the edible parts of the farmed tuna species. For example, leftover parts are also included in the "edible parts" in the present disclosure. Leftover parts generally mean the head section, bones, gills, fins, or a combination of two or more of them remaining after the meat has been removed from a fish and the flesh and skin attached thereto.

The edible parts of the farmed tuna species are preferably used as processed food, for example, the heated food products and unheated food products mentioned below, and may also be used as animal feed. The processed foods and animal feeds according to an embodiment may contain edible parts of the low selenium farmed tuna species. According to the present disclosure, food and animal feed can be provided that can easily avoid excessive ingestion of selenium.

Examples of animal feed include cat food, dog food, and feed for fish farming, poultry feed, and livestock feed. The ratio of edible parts of low selenium tuna farmed fish in animal feed is not particularly limited and may be from 0.1 wt.% to 100 wt.%, and the like. Animal feed can appropriately comprise as necessary other nutrients such as vitamins, acceptable carriers in animal feed such as water, other additives such as excipients, in response to the kinds of animal of interest, in addition to the edible parts of the low selenium farmed tuna species. The animal feed may be held in a container described below. Examples of food products include unheated food products, and heated food products.

One embodiment of the present disclosure comprises a processed food of the farmed tuna species comprising an edible part of the low selenium farmed tuna species and a container containing the edible part. The processed food can include a heated product and an unheated product. A processed food of farmed tuna species containing such container may be referred to as tuna species processed food.

"Unheated product" means an edible part that has not been heated. Examples include minced fish meat, raw fish, block fish, sliced fish, and frozen, chilled, freeze-dried, dried, and pickled products thereof. Whether a product has been heated can be determined by the color of the surface of the edible part. In the present specification, "heated" means that heat has been applied until actomyosin is denatured to a visible degree. When an edible part of a farmed fish is heat-treated, the edible part changes color due to denaturation of actomyosin. Thus, heating can be judged based on the change in color of the edible part.

Heated product means an edible part that has been heated. Examples include boiled, grilled, steamed and deep-fried fish products and boiled fish paste products, and canned products.

The shape of the edible part contained in the processed food is not particularly limited, and may be a shape that is characteristic of the site of the edible part or an amorphous product obtained by shredding, and the product may be further formed into a specific shape.

As necessary, processed food may include at least one selected from the group consisting of other food products, food ingredients, and accessories. Examples of other food products include rice, garnish (white radish, seaweed, and the like), beefsteak plant, ginger (pickled ginger), sprout, and seasonings. Examples of food ingredients include green onions used for a topping of tuna minced with green onions. Examples of accessories include plastic separators, displays (labels), refrigerants, coolants, water-absorbent sheet, ice, dry ice, and sherbet. An accessory may be held inside a container together with the edible part or may be placed outside the container, and it may be inseparable or detachable from the container. One or two or more other food products, food ingredients and accessories may be combined.

The container may be anything used for holding edible parts, and examples of materials include styrofoam, paper, vinyl, soft plastic, hard plastic, metal, and glass. The shape of the container may be any shape that can hold edible parts, and examples include wrapping sheets, covered or uncovered trays, bags, and cans. For example, as illustrated in Fig.4, a hank 11, which is obtained by cutting tuna muscle as an edible part, is placed on tray 12 as a container, and those wrapped with a wrap 13 as a container is made to be a processed food of farmed tuna species 10. Note that the container of the processed food of farmed tuna species 10 also contains a beefsteak plant 14, seasonings 15, as other food, and water absorbing sheet 16 as an accessory.

The low selenium farmed tuna species as described above, the edible parts of the low selenium farmed tuna species as described above, and the low selenium farmed tuna species for edible parts in the processed food may be obtained in any manner. The low selenium farmed tuna species is preferably a low selenium farmed tuna species produced by the following rearing method.

## Rearing Method

The method for rearing in an embodiment of the present invention includes feeding for at least 30 continuous days with a artificial feed including an filling mass containing oil and fish meal constituted from greater than or equal to 30% weight of sardine fish meal, and an outer shell constituted from at least one substance selected from the group consisting of proteins and polysaccharides, which wraps the filling mass, and as necessary, other steps may be included.

In this method for rearing, low selenium farmed tuna species in the embodiments of the present disclosure with reduced selenium content in muscles or liver can be efficiently obtained because a tuna species is fed for at least 30 continuous days with a artificial feed having a two-layered structure including a specified filling mass containing oil and a fish meal constituted from a relatively large amount of sardine fish meal, and a specified outer shell. From this perspective, in the present specification, "a method for rearing low selenium farmed tuna species" is synonymous with "a method for preparing low selenium farmed tuna species" or "a method for producing low selenium farmed tuna species" and these terms can be used interchangeably.

The artificial feed used in the method for rearing of this aspect has a two-layered structure including an outer shell and an filling mass. In the present disclosure, this artificial feed used in the method for rearing of the present aspect may be called as a low selenium farmed tuna species rearing feed.

The filling mass of a low selenium farmed tuna species farmed feed is based on fish meal and fat as main components, and the fish meal is composed by sardine fish meal of greater than or equal to 30 wt.% by weight of the total weight. Sardines which are raw materials for the sardine fish meal belong to the order of Clupeiformes, and they are saltwater fish of a size of approximately 10 cm to 30 cm represented by the genus of Sardinops, Estrumeus, and the like belonging to Clupeidae family, the genus Engraulis and Sarudina belonging to the Ergraulidae family. The sardine fish meal can be produced by steam drying or hot air methods, but it may be produced by other methods.

The sardine fish meal in the fish meal may be greater than or equal to 30 wt.%, greater than or equal to 40 wt.% or greater than or equal to 50 wt.%. The upper limit of the proportion of the sardine fish meal in the fish meal is not particularly limited, and it can be, for example, less than or equal to 95 wt.%, less than or equal to 98 wt.%, or less than or equal to 100 wt.%. If the proportion of the sardine fish meal in the fish meal is within this range, a farmed tuna species with a low selenium content can be efficiently obtained. Other fish meals that can be contained in fish meal include various fish meals such as horse mackerel, bonito, golden threadfin bream, and menhaden as well as powders of crustaceans such as krill, and materials deriving from squid, which are generally used as feed for fish farming can be used. In particular, sardine fish meal is suitable as a fish meal in the filling mass of a low selenium farmed tuna species rearing feed and when other fish meals are added to this, golden threadfin bream fish meal and/or bonito meal may be mixed to this. Feeding such fish meal as feed can contribute to the selenium content of the muscle to be less than or equal to 90$\mu$g per 100 g, or the selenium content of the liver to be less than or equal to 1400$\mu$g per 100 g in the tuna farmed fish.

This fish meal content is from 30 wt.% to 70 wt.%, preferably greater than or equal to 30 wt.%, more preferably greater than or equal to 35 wt.%, and most preferably greater than or equal to 45 wt.% of the weight of the entire filling mass. From the perspective of maintaining shape, it is preferable to add an excipient having binding properties, such as a polysaccharide, a hydrogenated oil, or an emulsifier, to the filling mass.

Furthermore, raw materials used in known artificial feeds for farmed fish can be added to the filling mass. Examples include proteins such as live fish, squid meal, krill meal, soybean lees, and corn gluten meal, oils and fats such as krill oil, whale oil, soy bean oil, corn oil, rape seed oil, and hydrogenated oils, starch-based materials such as starches, wheat flour, rice flour, tapioca powder, and corn powder, alginic acid and salts thereof, polysaccharides such as sodium carboxymethyl cellulose (CMC), guar gum, dextrins, chitosan, curdlan, pectin, carrageenan, mannan, gellan gum, gum arabic, and edible water-soluble celluloses, and vitamins, minerals.

The filling mass can contain from 20 wt.% to 70 wt.% of oil and fat relative to the total weight of the filling mass and, particularly in cases where the feed is fed to large farmed fish, oil and fat can be formulated such that they can be containd in preferably greater or equal to 30 wt.%, more preferably greater or equal to 35 wt.%, and most preferably greater than or equal to 45 wt.% the total weight of the filling mass. A high oil and fat content enables excellent effects on farmed fish growth and growth efficiency, and when the content of oil and fat is not greater than 70 wt.%, selecting and blending other preferred components is easy.

Fish oils and other plant-based oils may be used without modification. Alternatively, the flowability is preferably reduced by using oil-absorbing polysaccharides such as Vitacel WF200, Vitacel WF600, or Vitacel WF600/30 (all available from J. Rettenmaier & Söhne GmbH + Co KG), Oil Q No. 50 or Oil Q-S (available from Nippon Starch Chemical Co., Ltd.), or dextrins such as Pine Flow (available from Matsutani Chemical Industry Co., Ltd.), oil-absorbing proteins such as fermented soy beans and isoflavones, or hydrogenated oils obtained by hydrogenating oils and fats such as soy bean oil, rape seed oil, or palm oil.

Fish oil may also be used after reducing flowability by emulsification. From the perspective of digestibility by fish, the content of these components that reduce flowability is preferably not greater than 10 wt.%, and more preferably not greater than 5 wt.%, of the total weight of the filling mass. Fish oils are most preferred as the oil and fat. Part of the fish oils can be replaced with other plant-based oils and fats.

Polysaccharides, hydrogenated oils and the like may be formulated in the filling mass, and the filling mass may be emulsified and stabilized. This can prevent leakage of fish meal or oil and fat in the liquid state. When producing the artificial feed on machinery, it is preferred that the flowability and physical properties of the filling mass be compatible with the machinery. Examples of oil and fat adsorption agents include Oil Q (available from Nippon Starch Chemical Co., Ltd.), and examples of hydrogenated oils include Unishort K (available from Fuji Oil Co., Ltd.). Furthermore, New Fujipro SEH (available from Fuji Oil Co., Ltd.) and the like can be used for the emulsification treatment.

The outer shell of the low selenium farmed tuna species rearing feed is constituted from at least one substance selected from the group consisting of proteins and polysaccharides. The outer shell can include other substances apart from proteins and polysaccharides as additives and other formulation ingredients, as necessary. The outer shell is not particularly limited as long as it wraps the filling mass. For example, each of the at least one substance selected from the group consisting of a protein and a polysaccharide may be an outer shell formed under regular or irregular non-heating conditions, or it may be a heating gel obtained by heat treatment using at least one substance selected from the group consisting of a protein and a polysaccharide or an outer shell formed from a cooling gel obtained by a cooling process.

In the case where a raw material containing a protein raw material and/or a polysaccharide raw material forming a gel by heating is used, gelation is performed by heating, and a certain elasticity, extensibility, and adhesiveness are exhibited. The filling mass can certainly be encapsulated by using such a heated gel. A raw material composition containing a protein raw material and/or a polysaccharide raw material that forms a gel when heated is referred to as an outer shell composition and is explained below.

Gel formed by heating means gel formed by heating at least one raw material selected from the group consisting of proteins and polysaccharides to not lower than 60°C, or by heating to not lower than 60°C and then cooling, and gel formed by gelatinization by adding moisture to a polysaccharide such as a starch and heating the mixture to not lower than 60°C.

As the protein used for the outer shell, a protein having gel-forming properties is preferred, such as fish meat, minced fish meat, krill, gluten, collagen, soy bean protein, enzymatically decomposed soy bean protein, gelatin or egg albumen, either alone or in a combination of two or more types. Proteins also include alginic acid and salts thereof. Examples of polysaccharides include starches, alginic acid and salts thereof, sodium carboxymethyl cellulose (CMC), guar gum, dextrins, chitosan, curdlan, pectin, carrageenan, mannan, gellan gum, gum arabic, and edible water-soluble celluloses.

As starches used in the outer shell, tapioca starch, wheat starch, potato starch, corn starch, bean starch, waxy corn starch, and processed products thereof are preferred. Food ingredients that contain large quantities of these proteins and/or starches may be used. By heating an outer shell having a composition that contains these proteins and/or starches, the gel is immobilized and has softness, and the filling mass composition has holding power and a certain degree of strength. Above all, a gel formed by heating a protein or a gel formed by heating a starch is preferred from the perspective of physical properties such as softness and extensibility.

For example, in the case where minced fish meat is used as a raw material, it can be produced using a general method for producing a fish paste product such as kamaboko (semi-cylindrical processed fish paste). Specifically, greater than or equal to 2 wt.% of common salt is added and this is left to stand for greater than or equal to 10 minutes at a temperature of preferably from 30°C to 40°C, and then heated for greater than or equal to 10 minutes at a temperature of 80°C to 90°C. In the case where egg albumen is used, egg albumen, starch, fish meal, and water are formulated at a weight ratio of, for example, 1:1:2:6 and then heated, thereby producing a composition having the desired physical properties.

Various secondary raw materials may also be added to the outer shell composition within a range that does not affect gel formation. For example, fish meal or oils and fats may also be added to the outer shell composition within a range that does not affect gelation of the outer shell. Although it depends on the type of gel used, in the case of fish meal, the outer shell may contain up to approximately 60 wt.% of fish meal, and in the case of oil and fat, the outer shell may contain up to 30 wt.% of oil and fat relative to the total weight of the outer shell composition. When the outer shell contains both fish meal and oil and fat, the outer shell preferably contains from 20 to 30 wt.% of fish meal and from 5 to 10 wt.% of oil and fat relative to the total weight of the outer shell composition.

To further improve the quality of the gel in the outer shell, it is possible to add additives that are used as quality improving agents in fish paste products and the like to the outer shell composition. Examples of additives include starches, polysaccharide thickeners, soy protein isolates, baking soda, polyphosphates, egg albumen, transglutaminases, and various protease inhibitors. In particular, to enhance the strength of the gel of the outer shell, a thickening agent such as agar, gellan gum, pullulan, a starch, mannan, carrageenan, xanthan gum, locust bean gum, curdlan, pectin, alginic acid or a salt thereof, gum arabic, chitosan, a dextrin, or edible water-soluble celluloses can be formulated in the gel as appropriate.

As another preferred aspect of the outer shell, a heat-induced gel containing a starch as a primary component has excellent resiliency and softness. A gel obtained by adding water to a starch, kneading, and then heating exhibits good resiliency, softness, and extensibility. In particular, various processed starches have individual characteristics and by using two or more types thereof, it is possible to obtain an outer shell having good properties such as resiliency, softness, and extensibility. For example, it is possible to combine different types of processed starches, such as a combination of an etherified starch and a phosphoric acid-crosslinked starch.

An even stronger gel can be obtained by adding a protein such as gluten or soy bean protein to a starch. For example, gluten-containing wheat flour can also be used instead of gluten. Other secondary raw materials that can be added include cereal flours such as wheat flour; proteins such as soy bean protein, gluten, or egg albumen; sugars and sugar alcohols such as table sugar or starch syrup; thickening agents such as carrageenan, agar, gellan gum, pullulan, mannan, xanthan gum, locust bean gum, curdlan, pectin, alginic acid or a salt thereof, gum arabic, chitosan, dextrins, or edible water-soluble celluloses; and salts such as phosphates. For example, it is possible to impart strength to the outer shell by adding wheat flour to a starch. In addition, it is possible to suppress surface stickiness following heating by adding a certain quantity of a protein.

The starch used in the outer shell is not particularly limited, but can be tapioca starch, wheat starch, potato starch, corn starch, bean starch, and the like, and processed starches obtained by subjecting these starches to etherification, acetylation, acetyl crosslinking, ether crosslinking, phosphoric acid-crosslinking or alphatized hydroxypropylphosphoric acid-crosslinking are particularly preferred. Above all, the outer shell of the low selenium farmed tuna rearing feed contains a combination of tapioca starch acetate and etherified tapioca starch. Such low selenium farmed tuna rearing feed is preferred from the perspective of controlling surface stickiness and ease of consumption of the feed. Tapioca starch acetate and etherified tapioca starch may be combined in a weight ratio of, for example, from 1:1 to 1:20, preferably from 1:2 to 1:15, and more preferably from 1:8 to 1:12.

The low selenium farmed tuna rearing feed may be produced by adding water to an outer shell composition, including starch serving as the raw material of the outer shell and other secondary raw materials such as proteins, and then mixing and kneading, filling with the filling mass using a filling-wrapping machine or the like, and then heating.

Preferably, the low selenium farmed tuna rearing feed may be produced by a method including feeding the outer shell composition and the filling mass to a double nozzle extruder, and while mixing and heat-treating the outer shell composition, extrusion-forming them in a form such that the filling mass is enveloped by the outer shell. Other processes may also be included as necessary.

For example, the low selenium farmed tuna rearing feed may be produced by simultaneously heating the outer shell composition by extrusion cooking and coating the filling mass with the outer shell using an extruder provided with a double nozzle, and then cutting the cylindrical extrudate to a fixed length using a rising and descending shutter mechanism in accordance with the speed at which the extrudate is extruded, and wrapping the cut surface with the outer shell.

Equipment that has a double nozzle and is advantageous for obtaining this artificial feed with a two-layered structure may be a single screw or twin screw machine, and may have an extrusion mechanism and a heating mechanism. A device advantageous for obtaining a artificial feed having a two-layered structure is preferably an intermeshed co-rotation twin screw extruder. When such a device is used, there is the advantage that sufficient kneading can be performed in a short time. Examples of such a device include those available from Buhler AG, for example, the device disclosed in WO 2013/061892.

This device has an extruder with a heating function to which an outer shell composition feeder device is connected. A nozzle that pumps the filling mass into the center of the outer shell composition is disposed near the outlet of the extruder. An filling mass feeder device is connected to this nozzle. A conveyor is provided adjacent to the extruder, and a shutter mechanism is disposed at the end of the run of the conveyor. The outer shell composition feeder device mixes the outer shell composition and feeds it to the extruder using a pump. An filling mass feeder device pumps a separately mixed and produced filling mass to the extruder outlet from a nozzle. After being kneaded within the extruder, the outer shell composition is heated to form a heat-induced gel. The outer shell is extruded from the outlet in a cylindrical shape, the interior thereof is filled with the filling mass injected from the nozzle, and the extruded product is discharged in a two-layered cylindrical shape. The discharged two-layered cylindrical product is carried by a conveyor and inserted vertically downwards into the shutter mechanism. The product is sealed and cut to a fixed length by the shutter mechanism to form a two-layered shaped product.

Mixing in the extruder may be performed at a screw rotation speed from 300 to 800 rpm, preferably from 350 to 700 rpm. The heating temperature may be not lower than the temperature at which the starch or added protein forms a gel, and the product temperature may be from 60 to 110°C, preferably from 70 to 100°C, and more preferably approximately from 80 to 95°C. The discharge temperature may be from 80 to 110°C, and preferably from 85 to 105°C. The outlet pressure may be from 2 to 10 MPa, and preferably from 4 to 8 MPa.

The weight ratio of filling mass to outer shell composition may be from 4:6 to 9:1, and is preferably from 5:5 to 8:2. Combining the filling mass and outer shell composition in such a weight ratio is preferred from the perspective of resiliency of the obtained low selenium farmed tuna rearing feed, strength of the outer shell, and the like.

The water activity may be adjusted in consideration of the storage properties of the artificial feed. The water activity can be adjusted by adjusting the composition of the filling mass and/or outer shell. For example, the water activity of the filling mass can be reduced by adjusting the quantity of water added thereto. The water activity of the composition can be adjusted by adding a water activity-adjusting agent, such as a salt (common salt, sodium malate, sodium lactate, and the like), a sugar (table sugar, lactose, maltose, sorbitol, and the like), a sugar alcohol, an amino acid, a nucleic acid related compound, an organic acid, an alcohol, propylene glycose, glycerin, a starch, or a protein.

The quantity of water added to the outer shell composition may be a quantity that can be handled by the filling-wrapping machine or extruder, and approximately from 30 to 50 wt.% is appropriate. The moisture content of the outer shell, which wraps the filling mass with a heat-induced gel of a starch, may be approximately from 25 to 50 wt.%. The low selenium farmed tuna rearing feed can be stored long-term under refrigeration or freezing. It is also possible to further dry this feed to reduce the moisture content to from 10 to 20 wt.%. Storage properties can be further improved in this case. By drying the outer shell and also adding additives to the outer shell composition so as to reduce water activity, it is possible to produce a feed that can be stored long-term at room temperature. The water content of the outer shell of the artificial feed is preferably from 10 to 20 wt.%, and the water activity is not greater than 0.8, and particularly preferably not greater than 0.75% or not greater than 0.7%, from the perspective of long-term preservation. In the present disclosure, the water content is a value measured by the normal temperature heat drying method, and the water activity is a value measured by a water activity measurement device.

Various patterns can be considered for blending the outer shell composition containing, for example, a starch in the low selenium farmed tuna rearing feed. In the case of a feed, the nutrients and calories required for the feed differ according to the species and growth stage of the fish. As the quantity of fish meal or fish oil increases, the outer shell needs to be precisely formulated, but in the cases where the quantity of fish meal or fish oil is low, the outer shell can be formulated more freely. The low selenium farmed tuna rearing feed preferably contains at least from 20 to 80 wt.% of starch in terms of dry product relative to the total weight of the outer shell. In the case of an outer shell containing from 25 to 50 wt.% (in terms of dry product) of fish meal, it is preferable to add, in terms of dry product, from 20 to 65 wt.% of starch, from 5 to 20 wt.% of wheat flour, and a total of 5 to 15 wt.% of proteins, oils and fats, thickening agents, salts, and the like. In the case of an outer shell containing fish oil, it is preferable to add from approximately 1 to 5 wt.% of fish oil, from 1 to 2 wt.% of phosphate salts, from 1 to 5 wt.% of proteins, and from 1 to 5 wt.% of thickening agents.

When used as a secondary raw material, wheat flour is preferably strong flour having a high gluten content, but may also be weak flour. Additives used as quality improving agents in starch-based foods may be added to further improve the quality of the outer shell.

Taking the food preference of the farmed tuna species into consideration, the shape of the low selenium farmed tuna rearing feed has to be those close to a spindle-shape such as small fishes such as sardines preferred by farmed tuna species. Specific examples of the shape include an outer shell constituting an outer surface and an filling mass wrapped by the outer skin so that the side presents a substantially cylindrical shape, and both ends are covered and closed by the outer shell, and at least one of the both ends includes a shape such that a tapered protrusion is formed in which the outer shell protrudes toward the end portion. Note that the shape may further have the thickness of the outer shell which increases in the direction of the end portion in the protrusions; and have the protrusions which may be formed on both end portions, and further have, from the side, a diameter reducing part gradually decreasing its diameter with a convex surface protruding outward toward the end portion is possessed; and the protrusion which is formed at the end of the diameter reducing part, and a curved portion that gradually decreases in diameter along with a concaved surface that is concaved outward toward the end portion which may be formed between the diameter reducing part and the protruding part. The shape of the low selenium farmed tuna species as described above can contribute to the selenium content to be less than or equal to 90μg per 100 g in muscle or less than or equal to 1400μg per 100 g in liver of the farmed tuna species.

The method for producing the artificial feed may include drying a two-layered structure artificial feed obtained by cutting with a shutter mechanism.

The drying means is not particularly limited as long as it can dry the artificial feed. Drying conditions may be set such that the moisture content of the outer shell of the feed reaches the moisture content described above.

The drying conditions are preferably determined such that the moisture content of the outer shell gently reaches from 10 to 20 wt.%. When gentle drying conditions are used, the moisture content of the outer shell drops during the drying process. On the other hand, the moisture content of the filling mass tends to be higher than the moisture content immediately after the cutting process due to migration of moisture from the outer shell. As a result, a low selenium farmed tuna species rearing feed having good physical properties aligned with palatability to farmed fish can be obtained. Gentle drying conditions may be set as appropriate with respect to relative humidity, for example, in the range of 20°C to 45°C for 6 to 48 hours in a range from 20% to 50% relative humidity. The drying means that can be used may be any method that can achieve such gentle drying conditions. Examples include drying the artificial feed by loading it onto a mesh conveyor or a mesh container or sheet.

The method for rearing farmed tuna species according to an embodiment of the present disclosure includes feeding tuna species for at least 30 continuous days with the low selenium farmed tuna species rearing feed described above. By continuing at least 30 days of rearing with low selenium farmed tuna species rearing feed, it is possible to reduce the selenium content in the tuna species to be reared. The fact that it is a farmed fish under controlled rearing can be ascertained by checking for special components that can remain in the fish body that are not contained in bait fish, such as vegetable oils, among the ingredients of the low selenium farmed tuna species rearing feed fed to the farmed fish during the rearing period.

The rearing period using low selenium farmed tuna species rearing feed may be a longer period, for example, greater than or equal to 45 days, greater than or equal to 60 days, greater than or equal to 90 days, greater than or equal to 120 days, greater than or equal to 150 days, greater than or equal to 6 months, or greater than or equal to 1 year. Feeding low selenium farmed tuna species rearing feed over a longer period of time can ensure that selenium content in farmed fish to be further and certainly reduced. The effect of reducing selenium content in farmed fish may not occur uniformly throughout the fish body. For example, in a case where the period of rearing with a low selenium farmed tuna species rearing feed is greater than or equal to 30 days, the effect of reducing selenium content in the muscle can be obtained, and if it greater than or equal to 60 days, the effect of reducing selenium content in the liver can be obtained.

For rearing conditions, the conditions typically used for rearing tuna species can generally be used without modification. For example, the water temperature during the rearing period may be from 10°C to 32°C, and fish may be fed until satiated once per day at normal times and once every two days during winter. As noted above, limiting winter feeding to once in 2 days can contribute to make the selenium content to be less than or equal to 90 $\mu$g per 100 g in muscles, or less than or equal to 1400$\mu$g per 100 g in liver of the farmed tuna species. Note that winter period can be, for example, a period at which the average water temperature of one day is less than or equal to 20 °C.

In the present method for rearing, during the rearing period mentioned above before landing, there may be a period where other feed is fed as long as they are fed with the low selenium farmed tuna species rearing feed. Examples of other feed include bait fish (horse mackerel, mackerel, and the like), and moist pellets. The longer the feeding period of the low selenium farmed tuna species rearing feed before landing is, more certainly the selenium content can be reduced.

Rearing may begin from individual fish having a total fish body weight of 200 g, and may begin from individual fish having a total fish body weight greater than or equal to 500 g, 1 kg, or 10 kg. A healthy state can be maintained up to a targeted period as the fish grow by starting rearing at such a period.

The rearing period may be any period from the start of rearing to the targeted end time such as shipment or spawning. For example, the rearing period may be the period immediately before shipment. In this case, low selenium farmed tuna species rearing feed whose selenium content has stably been reduced and the edible part thereof can be supplied.

The low selenium farmed tuna species may be produced by methods other than rearing methods described above, as long as they have the features described in the present disclosure.

Method for producing edible parts

The method for producing the edible parts according to an embodiment of the present disclosure includes providing a low selenium farmed tuna species obtained by a method for rearing in the embodiment described above, collecting the edible parts from the provided low selenium farmed tuna species, and containing the edible pars in a container. The method may also include other steps as necessary.

In this method for producing edible parts, since edible parts are collected from farmed tuna species reared by a method for rearing in the embodiment described above, edible parts that contain a lower content of selenium than the edible parts of farmed tuna species reared in nature or with live food can be efficiently obtained.

The farmed tuna species may be individual fish or may be fish in the form described above. The method of collecting the edible parts is not particularly limited. The edible parts may be collected by methods typically used by persons skilled in the art using tools typically used for cutting the targeted edible parts from individual fish or portions thereof.

Applications

Because of the ow selenium content, low selenium farmed tuna species and edible parts thereof are preferred as food products that can be relatively easy to avoid excessive ingestion of selenium. Since low selenium farmed tuna species and edible parts thereof have a lowly adjusted selenium content, they can also be used as feeds for livestock such as cows, pigs, and birds, feeds for other farmed fish and the like, and feeds for animal such as pet foods.

Examples

The present disclosure is described below in detail using examples. However, the present disclosure is not limited in any manner by these examples.

**Example 1**

(1) Preparation of low selenium farmed tuna species rearing feed from

35 to 40 wt.% of fish meal, from 17 to 23 wt.% of starch (etherified tapioca starch: hydroxypropyl starch, manufactured by Nippon Starch Chemical Co., Ltd., G-800), 7 wt.% of wheat flour, 2 wt.% of starch (tapioca starch acetate: available from Nippon Starch Chemical Co., Ltd., Z-300), 2 wt.% of fish oil, 3 wt.% of common salt, 2.5 wt.% of sugar, 1 wt.% of gluten, and the balance water were mixed using an extruder at a screw rotation rate of 450 rpm, a discharge temperature of 90°C, and an outlet pressure of 50 bar (5 MPa), to produce an outer shell composition.
Then, 59 wt.% of fish meal, 36 wt.% of fish oil, 1.965 wt.% of hydrogenated oil, 2 wt.% of vitamins, 1 wt.% of minerals, and 0.035 wt.% of $\alpha$-tocopherol were mixed using an extruder at 60°C, to produce an filling mass.
The fish meal used in the filling mass include those made into a fish meal by applying stream dry method on Chilean or Peruvian sardine, which was then mixed with a fish meal of golden threadfin bream prepared by a similar method. The content ratio of the sardine fish meal in the fish meal used in the inner filing was 55 wt.% with respect to the total weight of the fish meal.
To produce a low selenium farmed tuna species rearing feed by combining the outer shell composition and the filling mass, a fully intermeshed co-rotation twin screw extruder having a double nozzle at the tip and having a discharge capacity of 1 t/h (available from Buhler AG) was used.
Both of the outer shell composition and the filling mass were granulated from the double nozzle at the tip of the extruder, and low selenium farmed tuna species rearing feed in which the filling mass was enveloped with the outer shell was obtained using a shutter device. The inner shell:outer shell weight ratio was 65:35.
Then, immediately after formation of the feed, the artificial feed was placed on a conveyor and drying treatment was performed for 24 hours by natural drying in an environment at temperature from 30°C to 40°C and relative humidity from 20% to 50%. A good artificial feed with substantially no cracking and the like was obtained through this process.
The moisture content of the outer shell of the obtained low selenium farmed tuna species rearing feed was from 12% to 17%, and the water activity was less than 0.8. The moisture content of the filling mass was estimated at approximately 4.7% immediately after formation. Moisture content was measured using Drying Over DX300 (available from Yamato Scientific Co., Ltd.), and water activity was measured using Aqualab CX-3 (available from Milestone General K.K.).

(2) Rearing

The produced low selenium farmed tuna species rearing feed was used to breed the Pacific bluefin tuna. A group reared with a low selenium farmed tuna species rearing feed was used in the Examples.
Approximately 3000 tuna fish weighing approximately 16 kg reared with bait fish and measuring approximately 90 cm in caudal furca length were held in a sea-level oval cylindrical fish cage of diameter 70 m, and rearing was started. The water temperature during the rearing period was from 13°C to 29°C. The feed was fed to the fish until satiated once per day at normal times and once every two days during winter. The amount of feed consumed was from 30 to 50 wt.% relative to the amount of bait fish throughout the test period. The rearing started on March and lasted for 18 months.

(3) Comparative Control Group

As a comparative control group, Pacific bluefin tuna reared under the same conditions as in (2) above was used other than feeding mackerel or sardine as bait fish. A comparative example is a group reared with bait fish.

(4) Measurement of fish body

For the Examples and Comparative Examples, the body temperature (°C) immediately after taken out from the fish cage was measured for each 8 tuna after the rearing period was over and then the weight (kg) and the caudal furca length (cm) in the GG tuna state were measured, and then, the condition factor was calculated from these. These results are shown in Table 1. Note that, in each of the tables below, a Student t-test is performed between the Examples and the Comparative Examples for each item, and as a result of this, T value (t), is also listed.

[Table 1]

| Individual No. | Temperature (°C) | | GG wt (kg) | | Caudal furca length (cm) | | Condition factor | |
|---|---|---|---|---|---|---|---|---|
| | Examples | Comparative Examples | Examples | Comparative Examples | Examples | Comparative Examples | Examples | Comparative Examples |
| 1 | 26.3 | 22.1 | 63.4 | 62.4 | 148 | 145 | 22.0 | 23.0 |
| 2 | 25.0 | 25.3 | 54.1 | 60.7 | 141 | 145 | 21.7 | 22.4 |
| 3 | 27.1 | 21.9 | 52.4 | 56.1 | 139 | 141 | 21.9 | 22.5 |
| 4 | 22.7 | 21.7 | 49.3 | 50.5 | 141 | 139 | 19.8 | 21.1 |
| 5 | 29.0 | 25.4 | 54.7 | 56.1 | 144 | 145 | 20.6 | 20.7 |
| 6 | 27.2 | 18.3 | 52.9 | 57.4 | 136 | 140 | 23.6 | 23.5 |
| 7 | 22.4 | 24.7 | 50.7 | 55.6 | 140 | 141 | 20.8 | 22.3 |
| 8 | 20.3 | 20.4 | 42.5 | 51.3 | 130 | 135 | 21.7 | 23.4 |
| Average | 25.0 | 22.5 | 52.5 | 56.3 | 140 | 141 | 21.5 | 22.4 |
| SD=Standard Deviations | 3.0 | 2.5 | 5.9 | 4.1 | 5.3 | 3.5 | 1.2 | 1.0 |
| T value (t) | 0.08750 | | 0.16086 | | 0.51976 | | 0.14052 | |

No significant difference (t<0.05) was seen in any of body temperature, GG weight, caudal furca length, and condition factor even by comparing the average values between the Examples and the Comparative Examples. Thus, an example reared with a low selenium farmed tuna species rearing feed can be said to have shown comparable growth to a comparative example breed with bait fish. Specifically, it was confirmed that whereas the tuna in the Examples had a total fish weight of about 16 kg when the test started, it exceeded an average of 50 kg in GG weight after about 18 months later even individual difference was observed. The average caudal furca length was about 141 cm and the average condition factor was about 22, which was also approximately equivalent to those of the tuna of the bait fish group.

(5) Selenium content and vitamin content

Fig.1 illustrates the cut plane on the tail side with the tuna cut vertically from the first dorsal fin posterior terminal portion. In this cut plane, site A illustrates the middle dorsal depth part, site B shows a central dorsal shallow part, and site C shows a central dorsal carinal muscle and site D shows red muscle. Furthermore, in Fig. 1, E indicates the abdominal cavity.

With respect to the tuna in each of the examples and the comparative examples described above, muscle was cut out at 5 cm square from the opposite side of cut plane of the tail side shown in Fig. 1, i.e., the part corresponding to section B in Fig. 1 on the cut plane of the head side, and this was collected as a test piece of the center dorsal shallow portion (medium-fatty tuna). The test piece was used to measure selenium content. Selenium content was measured according to "(1) Measured by Fluorometric Measurement" on page 433, "Sanitary Test Method and Note 2010" (issued on February 20, 2010, KANEHARA & Co. LTD.). Vitamin A, Vitamin D, and Vitamin E content were measured from the same test pieces according to known methods. The results are shown in Table 2.

[Table 2]

| Individual No. | Selenium (μg/100g) | | Vitamin A (μg/100 g) | | Vitamin D (μg/100 g) | | Vitamin E (mg/100 g) | |
|---|---|---|---|---|---|---|---|---|
| | Examples | Comparative Examples | Examples | Comparative Examples | Examples | Comparative Exam ples | Examples | Comparative Examples |
| 1 | 39 | 89 | 1130 | 2960 | 7.2 | 8.1 | 13.3 | 2.6 |
| 2 | 39 | 85 | 847 | 1510 | 13.3 | 3.8 | 16.0 | 1.0 |
| 3 | 41 | 87 | 247 | 1050 | 6.3 | 5.2 | 7.9 | 0.9 |
| 4 | 38 | 84 | 794 | 2660 | 7.8 | 7.7 | 14.2 | 1.8 |
| 5 | 41 | 99 | 915 | 1130 | 6.2 | 8.1 | 16.7 | 1.6 |
| 6 | 35 | 93 | 1230 | 1560 | 12.2 | 4.4 | 18.7 | 0.8 |
| 7 | 38 | 99 | 1050 | 2040 | 15.0 | 6.8 | 12.7 | 1.3 |
| 8 | 38 | 86 | 463 | 1930 | 7.4 | 7.5 | 8.1 | 1.6 |
| Average | 38.6 | 90.3 | 834.5 | 1855.0 | 9.4 | 6.5 | 13.5 | 1.5 |
| SD=Standard Deviations | 1.9 | 6.1 | 334.2 | 685.4 | 3.5 | 1.7 | 3.9 | 0.6 |
| T value (t) | 0.00000 | | 0.00348 | | 0.05591 | | 0.00004 | |

As shown in the above-mentioned Table 2, all of the tunas of the comparative examples exceeded a selenium content of 80μg/100g in the muscle. On the other hand, in the tuna of the Examples, the selenium content in the muscle was less than or equal to 50μg/100g in all individuals.

Thus, the muscle in the feed group had a lower selenium content than that of the bait fish group.

Note that the vitamin D content in the muscle was 9.4μg/100g on average in the Examples, which was above the average of 6.5μg/100g in the Comparative Examples, but there was no significant difference (t>0.05). However, the vitamin A content in the muscle was 834.5 μg/100g on average in the Examples, which was significantly below 1855.0 μg/100g in the Comparative Example (t<0.05). Furthermore, the vitamin E content in the muscle was of 13.5μg/100g on average in the Examples, which was significantly above 1.5μg/100g of the comparative example in the Examples (t < 0.05).

In addition, when the fat contents (medium-fatty tuna) used in the measurement were eaten as Sashimi, it was tasty.

(6) Fatty acid content

Various fatty acid contents were measured from the same test pieces described above using ordinary methods. Of these, those in which a significant difference (t < 0.05) was observed between the Examples and the Comparative Examples are shown in Table 3.

[Table 3]

| Individual No. | Fatty Acid Content (g/100g) | | | | | |
|---|---|---|---|---|---|---|
| | Oleic acid | | Linoleic acid | | α-linolenic acid | |
| | Examples | Comparative Examples | Examples | Comparative Examples | Examples | Comparative Examples |
| 1 | 29.35 | 18.59 | 7.73 | 1.93 | 1.80 | 1.00 |
| 2 | 30.98 | 17.61 | 6.97 | 1.75 | 1.55 | 0.81 |
| 3 | 35.34 | 18.01 | 7.14 | 2.03 | 1.14 | 0.98 |
| 4 | 31.23 | 18.61 | 6.99 | 1.88 | 1.43 | 0.92 |
| 5 | 33.10 | 18.96 | 6.13 | 2.34 | 1.27 | 1.06 |
| 6 | 32.27 | 19.19 | 6.45 | 2.29 | 1.52 | 1.05 |
| 7 | 32.05 | 20.01 | 6.46 | 2.15 | 1.43 | 0.99 |
| 8 | 29.84 | 17.57 | 5.87 | 2.34 | 1.08 | 1.19 |
| Average | 31.77 | 18.57 | 6.72 | 2.09 | 1.40 | 1.00 |
| SD=Standard Deviations | 1.90 | 0.83 | 0.60 | 0.23 | 0.23 | 0.11 |
| T value (t) | 0.00000 | | 0.00000 | | 0.00137 | |

As stated above, it was ascertained that the content of the unsaturated fatty acids in the muscles, such as oleic acid, linoleic acid and α-linolenic acid, as fatty acid in Examples, was significantly above (t < 0.05) compared to that in the Comparative Example.

(7) Free Amino Acid Content

Various free amino acid contents were measured from the same test pieces described above using ordinary methods. Of these, those in which a significant difference (t < 0.05) was observed between the Examples and the Comparative Examples are shown in Table 4, Table 5, and Table 6.

[Table 4]

| Individual No. | Amino acid content (g/100g) | | | | | | | |
|---|---|---|---|---|---|---|---|---|
| | Threonine | | Glutamic acid | | Glycine | | Alanine | |
| | Examples | Comparative Examples | Examples | Comparative Examples | Examples | Comparative Examples | Examples | Comparative Examples |
| 1 | 0.004 | 0.002 | 0.008 | 0.004 | 0.010 | 0.005 | 0.020 | 0.010 |
| 2 | 0.003 | 0.003 | 0.010 | 0.005 | 0.007 | 0.006 | 0.022 | 0.013 |
| 3 | 0.005 | 0.004 | 0.007 | 0.005 | 0.010 | 0.006 | 0.032 | 0.012 |
| 4 | 0.005 | 0.003 | 0.007 | 0.005 | 0.009 | 0.006 | 0.024 | 0.012 |
| 5 | 0.005 | 0.004 | 0.006 | 0.006 | 0.011 | 0.006 | 0.024 | 0.013 |
| 6 | 0.003 | 0.003 | 0.009 | 0.004 | 0.010 | 0.006 | 0.017 | 0.011 |
| 7 | 0.003 | 0.002 | 0.004 | 0.005 | 0.007 | 0.006 | 0.014 | 0.011 |
| 8 | 0.005 | 0.003 | 0.006 | 0.006 | 0.009 | 0.006 | 0.022 | 0.014 |
| Average | 0.004 | 0.003 | 0.007 | 0.005 | 0.009 | 0.006 | 0.022 | 0.012 |
| SD=Standard Deviations | 0.001 | 0.001 | 0.002 | 0.001 | 0.001 | 0.000 | 0.005 | 0.001 |
| T value (t) | 0.02299 | | 0.01035 | | 0.00003 | | 0.00017 | |

[Table 5]

| Individual No. | Amino acid content (g/100g) | | | | | |
|---|---|---|---|---|---|---|
| | Valine (BCAA) | | Isoleucine (BCAA) | | Leucine (BCAA) | |
| | Examples | Comparative Examples | Examples | Comparative Examples | Examples | Comparative Examples |
| 1 | 0.006 | 0.003 | 0.003 | 0.001 | 0.004 | 0.002 |
| 2 | 0.005 | 0.003 | 0.002 | 0.001 | 0.004 | 0.002 |
| 3 | 0.010 | 0.004 | 0.006 | 0.001 | 0.010 | 0.002 |
| 4 | 0.005 | 0.003 | 0.002 | 0.001 | 0.004 | 0.002 |
| 5 | 0.008 | 0.004 | 0.004 | 0.002 | 0.008 | 0.003 |
| 6 | 0.005 | 0.004 | 0.002 | 0.001 | 0.004 | 0.003 |
| 7 | 0.005 | 0.004 | 0.002 | 0.001 | 0.003 | 0.003 |
| 8 | 0.005 | 0.004 | 0.002 | 0.002 | 0.004 | 0.003 |
| Average | 0.006 | 0.004 | 0.003 | 0.001 | 0.005 | 0.003 |
| SD=Standard Deviations | 0.002 | 0.001 | 0.001 | 0.000 | 0.002 | 0.001 |
| T value (t) | 0.00280 | | 0.00946 | | 0.01092 | |

[Table 6]

| Individual No. | Amino acid content (g/100g) | | | | | |
|---|---|---|---|---|---|---|
| | Anserine | | Carnosine | | Proline | |
| | Examples | Comparative Examples | Examples | Comparative Examples | Examples | Comparative Examples |
| 1 | 0.092 | 0.020 | 0.002 | 0.000 | 0.003 | 0.000 |
| 2 | 0.091 | 0.030 | 0.002 | 0.000 | 0.002 | 0.000 |
| 3 | 0.101 | 0.032 | 0.000 | 0.000 | 0.010 | 0.000 |
| 4 | 0.114 | 0.021 | 0.004 | 0.000 | 0.004 | 0.000 |
| 5 | 0.093 | 0.011 | 0.000 | 0.000 | 0.007 | 0.000 |
| 6 | 0.096 | 0.012 | 0.003 | 0.000 | 0.000 | 0.000 |
| 7 | 0.092 | 0.036 | 0.003 | 0.000 | 0.003 | 0.002 |
| 8 | 0.114 | 0.035 | 0.003 | 0.000 | 0.003 | 0.002 |
| Average | 0.099 | 0.025 | 0.002 | 0.000 | 0.004 | 0.001 |
| SD=Standard Deviations | 0.010 | 0.010 | 0.001 | 0.000 | 0.003 | 0.001 |
| T value (t) | 0.00000 | | 0.00103 | | 0.00874 | |

As shown in the above Tables 4, 5, and 6, among the various free amino acids, it was found that the contents of threonine, glutamic acid, glycine, alanine, valine, isoleucine, leucine, anserine, carnosine, and proline in muscle in Examples were found to be significantly ($t<0.05$) above those in the Comparative Examples.

In particular, as shown in the above-mentioned Table 4, the contents of free amino acids such as glutamic acid, glycine, and alanine, increased significantly ($t<0.05$) in the Examples compared to the Comparative Examples, and thus, the tuna muscle reared with the low selenium farmed tuna species rearing feed showed a more palatable taste than that of the muscle of tunas reared by bait fish.

As shown in the above-mentioned Table 5, the contents of the branched chain amino acids (BCAA) among the essential amino acids, such as valine, isoleucine, and leucine increased significantly ($t<0.05$) in the Examples compared to those in the Comparative Examples, and thus, the tuna muscle reared with the low selenium farmed tuna species rearing feed is suggested to be more likely to be effective from the view point of nutritional supplement.

Furthermore, as shown in the above-mentioned Table 6, the contents of anserine which is believed to have an anti-fatigue effect, an active oxygen scavenging ability, a hypotensive effect, an anti-inflammatory effect and a uric acid value lowering effect are significantly increased ($t<0.05$) in the Examples compared to those in the Comparative Examples, and thus, the good influence on these effects by the muscle of a tuna reared with the low selenium farmed tuna species rearing feed was suggested.

**Example 2**

Next, the change of the selenium content by switching the types of feed was confirmed as follows.

The rearing was carried out in the same manner as in Example 1, other than that the switching of feed was carried out after 6 months or more of rearing in a part of each of the feed group or bait fish group. The group in which the feed changed from artificial feed to bait fish was referred to as the "bait fish switched group" and the group in which feed changed from bait fish to low selenium farmed tuna species rearing feed was referred to as the "artificial feed switched group". The amount of selenium in the muscle (medium-fatty tuna) and in the liver was measured after a predetermined period of time.

For the liver, the entire liver removed as guts when caught was thinly sliced and used as samples. Selenium content in liver was measured in the same manner as above. Weight and condition factor were measured according to ordinary methods. Selenium content was measured at the period indicated in Table 7 up to 7.5 month of the switching.

The results are shown in Table 7, Fig. 2 and Fig. 3. Note that in Fig.2 and Fig.3, the black circle indicates the selenium content of the bait fish switched group, and the white circle indicates the selenium content of the artificial feed switched group.

[Table 7]

| | Selenium Content (μg/100 g) | |
|---|---|---|
| | Muscle | Liver |
| Bait fish switched group | | |
| Switching period | 50 | 401 |
| 1.5 months after switching | 75.7 | |
| 3 months after switching | 86.7 | 1543.3 |
| 4.5 Months after switching | 97 | 1555 |
| 7.5 Months after switching | 99.5 | 1836 |
| Artificial feed switched group | | |
| Switching period | 100 | 2310 |
| 1.5 months after switching | 87 | |
| 3 months after switching | 67.3 | 913.3 |
| 4.5 Months after switching | 55 | 561 |
| 7.5 Months after switching | 47 | 419 |

As shown in Table 7, Fig. 2 and Fig. 3, the selenium content in the muscles and liver in both of the bait fish switched group and the artificial feed switched group rapidly changed along with the feed switching, and the selenium content of the artificial feed switched group was lower in both of the muscle and liver than in the bait fish switched group at about 2 months after switching the feed. On the basis of this fact, it has been found that the selenium content can change rapidly with respect to the types of feed.

In addition, in the artificial feed switched group, the selenium content rapidly decreased; at 1.5 months after the starting of rearing, this was 90 μg/100g in muscles, at 3 months after the starting of rearing, this was below 1000

μg in the liver, and at 4.5 months after the starting of rearing, the value of the selenium content was almost the same as that of the feed group at the starting of the test in both of muscle and liver. On the other hand, in the bait fish switched group, selenium content rapidly increased, and 7.5 months after, it reached to about 80% of the value of the feed group when the test started. On the basis of this result, it was discovered that the switching to low selenium farmed tuna species rearing feed has an effect of rapidly reducing selenium content in the farmed tuna species.

**Example 3**

Next, the effect of the proportion of fish meal and selenium content in the artificial feed was investigated.

Filling mass A with a normal selenium content was obtained as in the same manner to obtain the inner filing of Example 1(1) other than using 91.63 wt.% of sardine fish meal, 3.88 wt.% of vitamins, 0.1 wt.% of α-tocopherol (50 wt.%), and 4.45 wt.% of others. The selenium content of the filling mass A was 1.72 mg/kg.

Filling mass B with a high selenium content was obtained in the same manner as to obtain the filling mass of Example 1(1) other than using 33.56 wt.% of sardine fish meal, 58 wt.% of bonito meal, 3.88 wt.% of vitamins, 0.1 wt.% of α-tocopherol (50 wt.%), 0.07 wt.% of selenium yeast, and 4.45 wt.% of others. Furthermore, as a selenium yeast, "ALKOSEL selenium yeast" available from Miwa Seiyaku Co., Ltd. was used. The selenium content of the filling mass B was 3.04 mg/kg.

Artificial feed A or B having the filling mass and outer shell was obtained in the same manner as in Example 1(1) other than the inner filing A or inner filing B was used. Artificial feed A contains an filling mass A with an ordinary selenium content and a artificial feed B contains an inner filing B with a high selenium content.

In a sea surface oval-shaped fish cage of a diameter of 70 m, the rearing of a tuna with a body weight (GG) of 41 kg was carried out for August to November using a artificial feed A or artificial feed B. The water temperature during the rearing period was from 13°C to 29°C. The feeding was carried out as a satiated feeding of 5 days or 6 days per week. The amount of feed consumed was from 30 to 50 wt.% relative to the amount of bait fish throughout the test period. The amount selenium in muscle and liver was measured or calculated after a predetermined period of time. The results are shown in Table 8.

[Table 8]

| Kinds of artificial feed | Selenium Content (μg/100 g) | |
|---|---|---|
| | Muscle | Liver |
| A | 38.8 | 527 |
| B | 48.5 | 378 |

The four-month rearing with artificial feed A or artificial feed B resulted significant decrease of selenium content in both of muscle (less than or equal to 90μg/100g) and liver (1400μm/100g).

Moreover, as shown in Table 8, in either case when artificial feed B with filling mass B with a high selenium content or artificial feed A with filling mass A with a general selenium content was used, no large difference between the selenium content of the muscle and liver of the tuna was observed.

On the basis of this result, it was found that, regardless to the selenium content in the artificial feed, a low selenium farmed tuna species can be obtained as long as the blending ratio of fish meals is greater than or equal to 30 wt.%.

From the above examples, it is obvious that a low selenium farmed tuna species with a low selenium content than a farmed tuna species eating bait fish can be produced.

It is therefore obvious that low selenium farmed tuna species and the edible parts thereof or processed food thereof can reduce the selenium intake compared to that of the farmed tuna species reared with bait fish or wild tuna.

## Claims

1. A farmed tuna species having either a muscle with a selenium content of less than or equal to 90 μg per 100 g or a liver with a selenium content of less than or equal to 1400 μg per 100 g.

2. The farmed tuna species according to claim 1, wherein the farmed tuna species is obtained by rearing management with feed including an artificial feed.

3. The farmed tuna species according to claim 1 or 2, wherein a total fish body weight is greater than or equal to 20 kg.

4. The farmed tuna species according to any one of claims 1 to 3, wherein the caudal furca length is greater than or equal to 90 cm.

5. The farmed tuna species according to any one of claims 1 to 4, wherein a condition factor is greater than or equal to 20.

6. The farmed tuna species according to any one of claims 1 to 5, wherein the farmed tuna species is a tuna species of the Thunnus genus, Auxis genus, Sarda genus, Euthynnus genus, or Katsuwonus genus.

7. The farmed tuna species according to claim 6, wherein the tuna species is Thunnus alalunga, Thunnus orientalis, Thunnus maccoyii, Thunnus atlanticus, Thunnus thynnus, Thunnus albacares, Thunnus obesus, Thunnus tonggol, Sarda orientalis, or Euthynnus affinis.

8. The farmed tuna species according to claim 6 or 7, wherein the farmed tuna species is a tuna species having a staple food of fishes having the northern hemisphere as a habitat.

9. The farmed tuna species according to claim 8, wherein the farmed tuna species is Thunnus alalunga, Thunnus orientalis, Thunnus atlanticus, Thunnus thynnus, Thunnus albacares, Thunnus obesus, Thunnus tonggol, Sarda orientalis, or Euthynnus affinis.

10. The farmed tuna species according to any one of claims 1 to 9, wherein at least one site selected from the group consisting of gills, guts, tail section, and head section is removed.

11. The farmed tuna species according to any one of claims 1 to 10, wherein the farmed tuna species has a morphology in which gills and guts are removed.

12. The farmed tuna species according to claim 11, wherein the total weight is greater than or equal to 17 kg.

13. An edible part of a farmed tuna species having either a muscle with a selenium content of less than or equal to 90 μg per 100 g or a liver with selenium content of less than or equal to 1400 μg per 100 g.

14. The edible part of the farmed tuna species according to claim 13, wherein the edible part is at least a portion of fish meat or guts.

15. The edible part of the farmed tuna species according to claim 13, wherein the edible part is a lean meat or fatty meat.

16. The edible part of the farmed tuna species according to claim 14, wherein the selenium content in muscle is less than or equal to 90 μg per 100 g or the selenium content in liver is less than or equal to 1400 μg per 100 g.

17. A processed food of a farmed tuna species comprising:

the edible part of the farmed tuna species according to any one of claims 13 to 16, and
a container containing the edible part.

18. The method for rearing the farmed tuna species according to any one of claims 1 to 12 comprising feeding for at least 30 continuous days with an artificial feed comprising:

an filling mass containing oil and fish meal constituted from greater than or equal to 30 wt.% of sardine fish meal; and
an outer shell constituted from at least one substance selected from the group consisting of proteins and polysaccharides, which wraps the filling mass.

19. A method for producing the processed food of the farmed tuna species comprising:

providing a farmed tuna species obtained by the method for rearing the farmed tuna species of claim 18;
collecting an edible part from the provided farmed tuna species; and
containing the edible part in a container.

**20.** A farmed tuna species having both a muscle with a selenium content of less than or equal to 90 μg per 100 g and a liver with a selenium content of less than or equal to 1400 μg per 100 g.

**21.** An edible part of a farmed tuna species having both a muscle with a selenium content of less than or equal to 90 μg per 100 g and a liver with a selenium content of less than or equal to 1400 μg per 100 g.

FIG.1

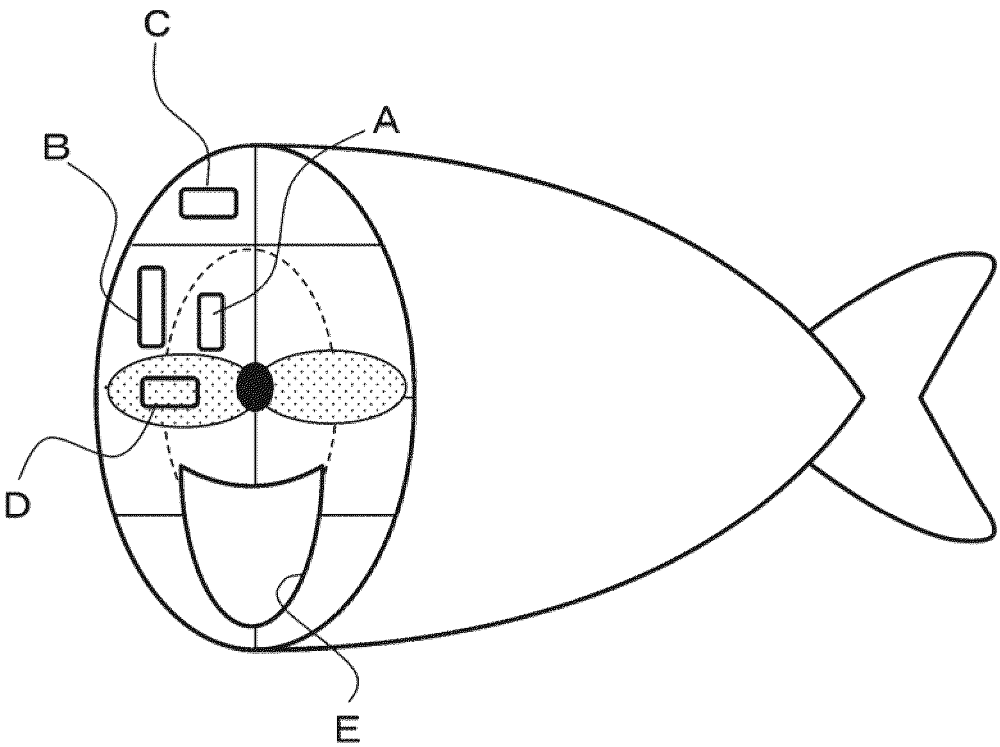
C
A
B
D
E

FIG.2

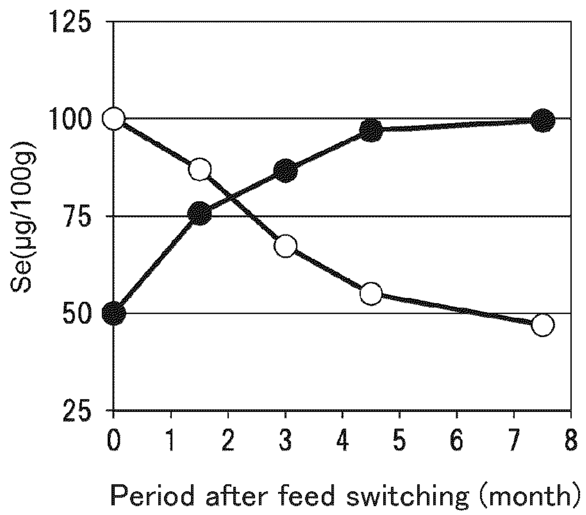
125
100
75
50
25
Se(μg/100g)
0
1
2
3
4
5
6
7
8
Period after feed switching (month)

FIG.G

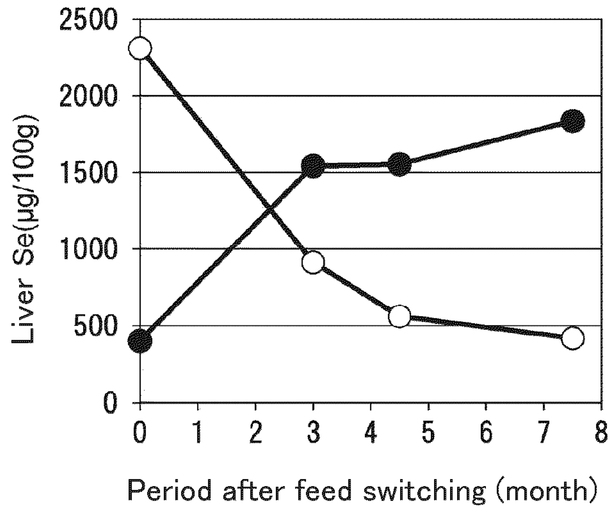
2500
2000
1500
1000
500
0
Liver Se(μg/100g)
0
1
2
3
4
5
6
7
8
Period after feed switching (month)

FIG.I

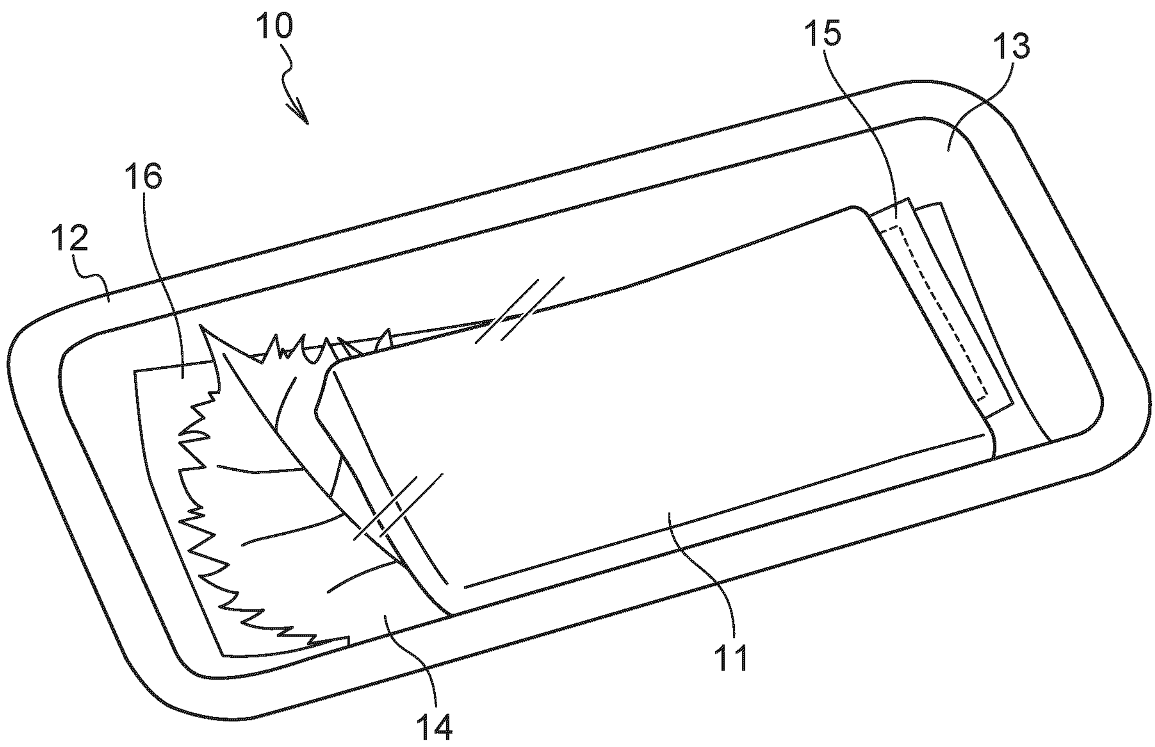
10
15
13
16
12
11
14

**INTERNATIONAL SEARCH REPORT**

International application No.
PCT/JP2018/030843

A. CLASSIFICATION OF SUBJECT MATTER
Int.Cl. A23K50/80(2016.01)i, A01K61/10(2017.01)i, A23K10/22(2016.01)i, A23K40/30(2016.01)i, A23L17/00(2016.01)i

According to International Patent Classification (IPC) or to both national classification and IPC

B. FIELDS SEARCHED

Minimum documentation searched (classification system followed by classification symbols)
Int.Cl. A23K50/80, A01K61/10, A23K10/22, A23K40/30, A23L17/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2011-121914 A (FISHERIES RESEARCH AGENCY) 23 June 2011, paragraph [0002] & US 2011/0178018 A1, paragraph [0003] | 1,6-9,13-17,20,21<br>2-5,10-12<br>18,19 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 November 2018 (08.11.2018) | 20 November 2018 (20.11.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/030843

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y<br>A | 山下倫明，セレン含有抗酸化物質セレノネインの生理活性, [online], 21 March 2017, [retrieved on 08 November 2018], Retrieved from the internet: <URL:www.fish-u.ac.jp/food/picForIndex/Selenoneine.pdf> (for publication date, refer to http://www.fish-u.ac.jp/food/html/main.html), non-official translation (YAMASHITA, Michiaki, "Biological activity of selenium-containing antioxidant, selenoneine") | 1,6-9,13-17,20,21<br>2-5,10,12<br>18,19 |
| Y<br>A | WO 2010/110326 A1 (NIPPON SUISAN KAISHA, LTD.) 30 September 2010, entire text, all drawings, in particular, paragraphs [0043]-[0068] & US 2012/0076897 A1, entire text, all drawings, in particular, paragraphs [0080]-[0120] & EP 2412248 A1 | 2-5,10-12<br>18,19 |
| Y<br>A | JP 2012-65565 A (NIPPON SUISAN KAISHA, LTD.) 05 April 2012, entire text, all drawings, in particular, paragraphs [0043]-[0072] (Family: none) | 2-5,10-12<br>18,19 |
| Y<br>A | JP 2014-45750 A (NIPPON SUISAN KAISHA, LTD.) 17 March 2014, entire text, all drawings, in particular, paragraphs [0027]-[0043] (Family: none) | 2-5,10-12<br>18,19 |
| Y<br>A | JP 2008-220180 A (KINDAI UNIVERSITY) 25 September 2008, entire text, in particular, claims 1-11, paragraphs [0042]-[0052] (Family: none) | 2-5,10-12<br>18,19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010110326 A1
- JP 2012065565 A
- JP 2014045750 A
- WO 2013061892 A


### Non-patent literature cited in the description


- *Journal of Food Composition and Analysis,* 2001, vol. 14, 461-467
- Standard Tables of Food Composition. 2015
- 1) Quantification of fluorescent luminous intensity measurement. Methods of Analysis in Health Science 2010. KANEHARA & Co. LTD, 20 February 2010, 433
- 1) Measured by Fluorometric Measurement. Sanitary Test Method and Note 2010. KANEHARA & Co. LTD, 20 February 2010, 433